# FASCICULE DE BREVET EUROPEEN

(11) **EP 3 159 964 B1**
(45) Date de publication et mention de la délivrance du brevet: **19.12.2018**
(21) Numéro de dépôt: 16194513.4
(22) Date de dépôt: 19.10.2016
(51) Int. Cl.: H01Q 1/22, G05D 1/00, B64D 47/08, H01Q 1/28

(54) **DRONE AYANT UN SUPPORT LOGEANT UNE ANTENNE**
DROHNE MIT EINGEBAUTER ANTENNE IM STUTZBEIN
DRONE WITH BODY LEG HOUSING AN ANTENNA

(30) Priorité: 23.10.2015 FR 1560124
(43) Date de publication de la demande: 26.04.2017
(73) Titulaire: Parrot Drones, 75010 Paris (FR)
(72) Inventeur: CAUBEL, Christine, 75014 Paris (FR); SAVOYE, Guillaume, 75010 Paris (FR); MORRA, Flavien, 93500 Pantin (FR); FERRAND, Arsène, 75019 PARIS (FR)
(74) Mandataire: Dupuis-Latour, Dominique

(56) Documents cités:
- WO-A1-2011/058255
- GB-A- 1 523 714

## Description

L'invention concerne les engins volants motorisés tels que les drones, notamment les drones à voilure tournante de type quadricoptère. *L'AR.Drone 2.0* ou le *Bebop Drone* de Parrot SA, Paris, France sont des exemples typiques de tels quadricoptères. Ils sont équipés d'une série de capteurs (accéléromètres, gyromètres 3 axes, altimètre) et peuvent comprendre au moins une caméra. Ces drones sont pourvus de plusieurs rotors entrainés par des moteurs respectifs aptes à être commandés de manière différenciée afin de piloter le drone en attitude et en vitesse. Ces drones peuvent comprendre une caméra vidéo frontale captant une image de la scène vers laquelle est dirigé le drone.

Le WO 2011/058255 A1 (Parrot) décrit l'agencement général d'un tel drone et sa carte électronique supportant les divers capteurs et circuits électroniques de traitement des données et de commande de vol du drone.

La caméra vidéo frontale est utilisable pour un pilotage "en mode immersif" du drone, c'est-à-dire où l'opérateur se sert de l'image de la caméra de la même façon que s'il se trouvait lui-même à bord du drone. Elle peut également servir à capter des séquences d'images d'une scène vers laquelle se dirige le drone, l'opérateur se servant du drone de la même façon que d'une caméra qui, au lieu d'être tenue à la main, serait portée par le drone. Les images recueillies peuvent être enregistrées, mises en ligne sur des sites web, envoyées à d'autres internautes, partagées sur des réseaux sociaux, etc.

Les WO 2010/061099 A2, EP 2 364 757 A1 et EP 2 450 862 A1 (Parrot) décrivent le principe de pilotage d'un drone par l'intermédiaire d'un téléphone ou tablette multimédia à écran tactile et accéléromètres intégrés, par exemple un *smartphone* de type *iPhone* ou une tablette de type *iPad* (marques déposées).

Dans la suite de la description, on utilisera de façon générale le terme de "tablette" pour désigner cet appareil, mais ce terme ne doit pas être entendu dans son acception étroite ; bien au contraire, elle englobe également les dispositifs fonctionnellement équivalents, notamment tous les dispositifs portables munis au moins d'un écran de visualisation et de moyens d'échange de données sans fil, tels que *smartphone*, baladeur multimédia non muni de fonctions de téléphonie, console de jeu, etc.

La tablette incorpore les divers organes de contrôle nécessaires à la détection des commandes de pilotage et à l'échange bidirectionnel de données via une liaison radio de type réseau local sans fil Wi-Fi (IEEE 802.11) ou Bluetooth directement établie avec le drone. Son écran tactile affiche l'image captée par la caméra frontale du drone, avec en superposition un certain nombre de symboles permettant le contrôle du vol et l'activation de commandes par simple contact du doigt de l'opérateur sur cet écran tactile.

La liaison radio sans fil bidirectionnelle comprend une liaison montante (de la tablette vers le drone) et une liaison descendante (du drone vers la tablette) pour transmettre des trames de données contenant :
- (de la tablette vers le drone) les commandes de pilotage, ci-après simplement désignées "commandes", envoyées à intervalles réguliers et de façon systématique ;
- (du drone vers la tablette) le flux vidéo issu de la caméra ; et
- (du drone vers la tablette) en tant que de besoin, des données de vol établies par le drone ou des indicateurs d'état tels que: niveau des batteries, phase de vol (décollage, stabilisation automatique, posé au sol, etc.), altitude, défaut détecté, etc.

Pour permettre une telle communication, le drone comprend un moyen de communication relié à une antenne de sorte à permettre une communication avec le dispositif de pilotage.

L'antenne est par exemple une antenne Wi-Fi.

Toutefois, pour que l'antenne permettant une communication entre le drone et le dispositif de commande soit efficace et que les performances soient maximisées, il est nécessaire que l'antenne soit disposée de manière quasiment verticale, éloignée des éléments métalliques présents dans le corps du drone et de la batterie.

Pour ce faire, il est connu de positionner l'antenne contre le corps du drone, comme cela est divulgué par exemple par le GB 1 523 714 A.

Un autre agencement connu consiste à positionner l'antenne au niveau de l'un des pieds de support du drone et de la fixer au moyen d'un adhésif. Ce moyen de fixation de l'antenne présente des inconvénients. Notamment, en cas de choc sur les pattes du drone, l'antenne peut se détacher aisément voire être endommagée et il n'est pas prévu que cette antenne puisse être remplacée facilement.

Le but de l'invention est de remédier à ces divers inconvénients, en proposant un drone dans lequel l'antenne est installée de manière à être robuste mécaniquement aux chocs. En outre, cette intégration est légère de sorte à maintenir, voire améliorer l'autonomie du drone. De plus, elle permet un remplacement aisé de l'antenne en cas de panne.

À cet effet, l'invention propose un drone à voilure tournante du type général divulgué par le WO 2011/058255 A1 précité, correspondant au préambule de la revendication 1.

La partie caractérisante de cette revendication 1 énonce les éléments propres à l'invention, consistant essentiellement à ménager, dans un support apte à maintenir à distance du sol le corps du drone, un logement apte à recevoir l'antenne, et de munir ce logement de moyens de maintien de l'antenne sur le support.

Les sous-revendications visent des formes de mise en oeuvre subsidiaires, avantageuses.

On va maintenant décrire un exemple de mise en oeuvre de la présente invention, en référence aux dessins annexés où les mêmes références désignent d'une figure à l'autre des éléments identiques ou fonctionnellement semblables.
La Figure 1 est une vue d'ensemble montrant le drone et l'appareil de télécommande associé permettant son pilotage à distance.
La Figure 2 est une vue en perspective éclatée d'un drone montrant, dissociés, les différents éléments internes de celui-ci.
La Figure 3 est une vue partielle, agrandie, de la région du drone montrant le support du corps de drone intégrant une antenne conformément à l'invention.
La Figure 4 est une vue éclatée de l'extrémité du bras de liaison et du support du corps de drone selon l'invention.

On va maintenant décrire un exemple de réalisation et de mise en oeuvre de l'invention.

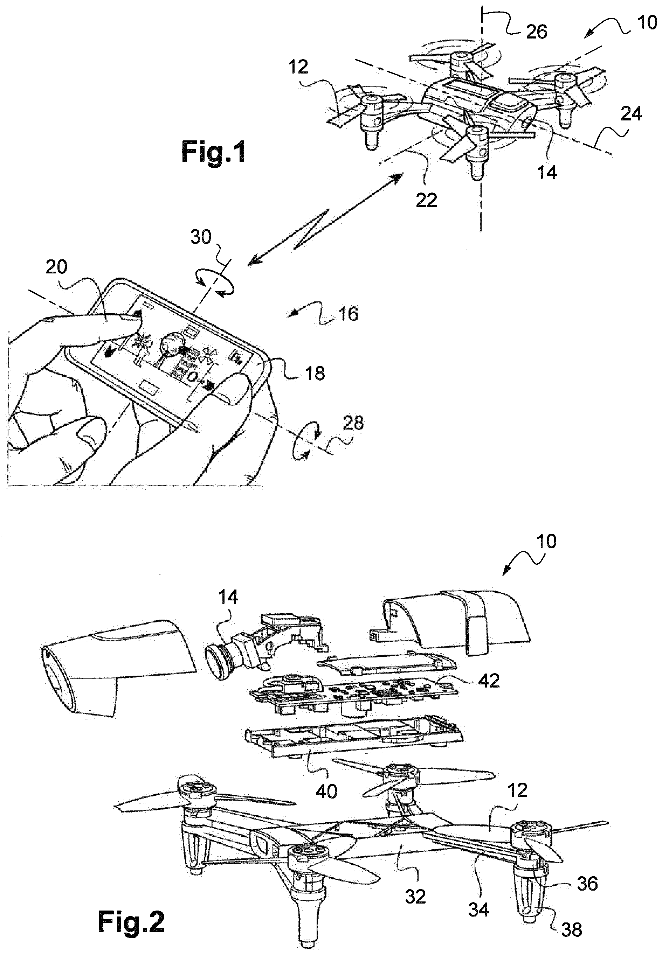

Sur la Figure 1, la référence 10 désigne de façon générale un drone, qui est par exemple un quadricoptère tel que le modèle *Bebop Drone* de Parrot SA, Paris, France. Ce drone comporte quatre rotors coplanaires 12 dont les moteurs sont pilotés indépendamment par un système intégré de navigation et de contrôle d'attitude. Il est pourvu d'une caméra 14 à visée frontale permettant d'obtenir une image de la scène vers laquelle est orienté le drone.

Le drone comporte également une caméra à visée verticale (non représentée) pointant vers le bas, apte à capter des images successives du terrain survolé et utilisée notamment pour évaluer la vitesse du drone par rapport au sol. Des capteurs inertiels (accéléromètres et gyromètres) permettent de mesurer avec une certaine précision les vitesses angulaires et les angles d'attitude du drone, c'est-à-dire les angles d'Euler (tangage *ϕ* roulis *θ* et lacet *ψ*) décrivant l'inclinaison du drone par rapport à un plan horizontal d'un repère terrestre fixe. Un télémètre à ultrasons disposé sous le drone fournit par ailleurs une mesure de l'altitude par rapport au sol.

Le drone 10 est piloté par un appareil de télécommande distant 16 pourvu d'un écran tactile 18 affichant l'image embarquée par la caméra frontale 14, avec en superposition un certain nombre de symboles permettant l'activation de commandes de pilotage par simple contact du doigt 20 d'un utilisateur sur l'écran tactile 18. L'appareil 16 est pourvu de moyens de liaison radio avec le drone, par exemple de type réseau local *Wi-Fi* (IEEE 802.11), pour l'échange bidirectionnel de données du drone 10 vers l'appareil 16, notamment pour la transmission de l'image captée par la caméra 14, et de l'appareil 16 vers le drone 10 pour l'envoi de commandes de pilotage.

Sur la Figure 2, on a représenté le drone 10, avec un corps de drone 10 comprenant en partie inférieure un châssis 32 solidaire de quatre bras de liaison 34 rayonnant à partir du châssis. Chaque bras est équipé à son extrémité distale d'un bloc propulseur 36 comprenant un moteur entrainant en rotation une hélice 12. En partie inférieure, le bloc propulseur 36 est prolongé par un support du corps de drone 38 formant un pied sur lequel pourra reposer au sol le drone à l'arrêt.

Selon un autre mode de réalisation, le ou les supports du corps de drone 38 sont fixés au châssis 32 du corps de drone 10.

Selon encore un autre mode de réalisation, le ou les supports du corps de drone 38 sont fixés sur les bras de liaison 34.

Le corps de drone comprend une platine 40 destinée à recevoir la carte électronique 42 portant la quasi-totalité des composants électroniques du drone, y compris la centrale inertielle de celui-ci et à recevoir des moyens de communication sans fil. La platine 40 se présente sous forme d'un élément monobloc en matériau métallique léger et fait fonction de refroidisseur pour évacuer les calories excédentaires de certains composants fortement générateurs de chaleur tels que le processeur principal, la puce radio, les MOSFETs de commutation des moteurs, etc.

Conformément à l'invention, au moins un support du corps de drone 38 comprend un logement d'antenne 44, l'antenne 46 étant reliée aux moyens de communication sans fil de la carte électronique 42, notamment via un câble de connexion. En outre, le logement d'antenne 44 est muni de moyens de maintien de l'antenne de communication de manière à maintenir fermement l'antenne sur le support du corps de drone 38.

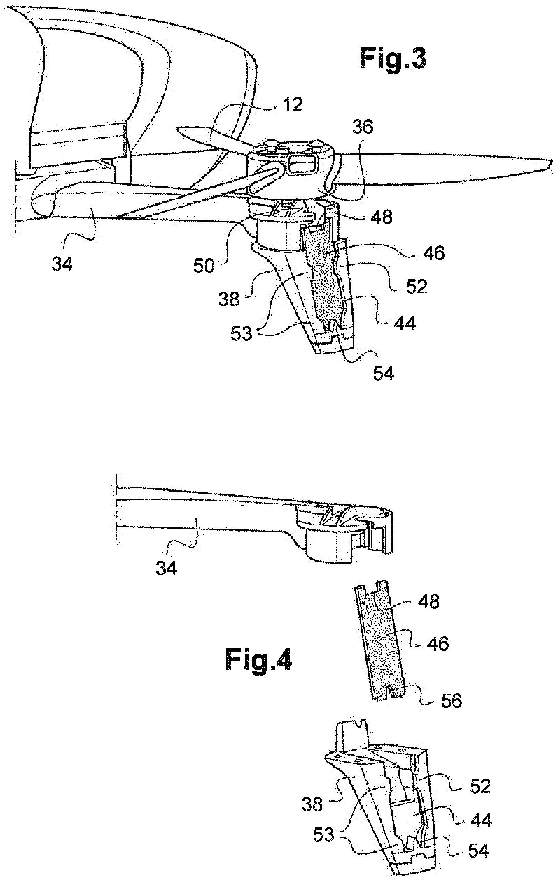

La Figure 3 est une vue agrandie d'un bloc propulseur 36 et du support du corps de drone 38, ces derniers étant montés à l'extrémité d'un bras de liaison 34. Il est montré un support du corps de drone 38 intégrant dans son logement d'antenne 44, une antenne de communication 46, ce sous-ensemble étant fixé au bras de liaison 34 sous le bloc propulseur 36. L'antenne de communication 46 comprend une encoche 48 positionnée sous le bloc propulseur 36 afin de permettre le passage du câble 50 du moteur du bloc propulseur 36. De la sorte l'encombrement lié à l'intégration dans le support du corps de drone 38 est optimisé.

Tel qu'illustré sur la figure 3, les moyens de maintien de l'antenne de communication sont des moyens de liaison glissière 52 dans lesquels l'antenne 46 est glissée par translation.

Une liaison glissière assure un unique axe de liberté, à savoir le mouvement de translation dans la direction de la liaison glissière.

Selon le mode de réalisation illustré en Figure 3 et en Figure 4, les moyens de liaison glissière 48 sont composés de zones butoirs 53 permettant de réaliser la glissière. Selon l'exemple illustré, quatre zones butoirs 53 sont représentées, toutefois, les moyens de liaison glissière 46 peuvent être réalisés au moyen d'au moins deux zones butoirs 53. Toutefois, d'autres moyens de maintien peuvent être utilisés afin de bloquer fermement l'antenne dans le logement d'antenne 44.

Le support du corps de drone 38 est fixé sur le bras de liaison et est dans une direction tournée vers le sol de manière sensiblement verticale. Selon un mode de réalisation particulier, le support du corps de drone 38 est positionné sensiblement perpendiculairement au bras de liaison 34. Selon un autre mode de réalisation particulier, le support du corps de drone 38 est positionné selon un angle de 60° à 90° par rapport à la direction du bras de liaison 34.

L'antenne de communication 46 est glissée dans le support du corps de drone 38 sensiblement perpendiculairement au corps du drone. En effet, afin d'optimiser le rayonnement de l'antenne formé de lobes, il est avantageux de positionner l'antenne de communication sensiblement perpendiculairement, notamment de manière à former un angle de 70 à 90° par rapport au bras de liaison 34.

Le logement d'antenne 44 comprend un détrompeur 54 d'une forme donnée, l'antenne ayant un détrompeur de forme complémentaire 56. Le détrompeur est un élément, par exemple une excroissance, permettant d'éviter les erreurs d'assemblage lors du montage.

Tel qu'illustré en figures 3 et 4, le détrompeur est positionné dans le logement d'antenne 44 à l'opposé du bloc propulseur 36.

La Figure 4 est une vue éclatée d'un bras de liaison 34, d'un support du corps de drone 38 et d'une antenne 46 de sorte à illustrer le procédé d'assemblage de l'antenne 46 sur le drone.

En particulier, afin de permettre le remplacement de l'antenne de communication 46, le support du corps de drone 38 est un élément amovible comprenant le logement d'antenne 44 et les moyens de liaison glissière 52. Le support du corps de drone 38 amovible permet de faire glisser l'antenne de communication 46 dans le logement d'antenne 44 puis un assemblage du support du corps de drone contenant l'antenne sur le bras de liaison 34 tel qu'illustré. Une fois assemblé, le bras de liaison vient fermer le logement d'antenne de sorte à fixer fermement l'antenne de communication 46 dans le logement 44 du support du corps de drone.

Le support du corps de drone 38 comprend des moyens de connexion apte à connecter l'antenne et l'antenne est munie de moyens de connexion complémentaires.

Ces moyens de connexion permettent un changement aisé de l'antenne en cas de panne de celle-ci.

De manière alternative, le câble de connexion des moyens de communication sans fil est soudé sur l'antenne 46.

Selon l'invention, l'antenne étant intégrée dans la structure rigide du support du corps de drone, cette dernière protège l'antenne en cas de choc.

## Revendications

1. Drone à voilure tournante, comprenant :
- un corps de drone (10) comprenant une carte électronique contrôlant le pilotage du drone, des moyens de communication sans fil et une pluralité de bras de liaison (34),
- lesdits moyens de communication sans fil étant connectés à au moins une antenne de communication (46),
- une pluralité de blocs propulseurs (36) montés à l'extrémité distale de bras de liaison (34) respectifs,
- au moins un support (38), apte à maintenir à distance du sol ledit corps de drone (10),
**caractérisé en ce que** ledit au moins un support (38) comprend un logement d'antenne (44) apte à recevoir ladite antenne (46), ledit logement d'antenne (44) étant muni de moyens (52, 53) de maintien de ladite antenne (46) sur ledit support (38).

2. Drone selon la revendication 1, dans lequel lesdits moyens (52, 53) de maintien de l'antenne sont des moyens de liaison glissière dans lesquels l'antenne est glissée par translation.

3. Drone selon la revendication 1, dans lequel ledit support (38) est fixé sur un bras de liaison respectif (34) et est dans une direction tournée vers le sol de manière sensiblement verticale.

4. Drone selon la revendication 1, dans lequel ledit support (38) est positionné selon un angle de 60° à 90° par rapport à la direction du bras de liaison respectif (34).

5. Drone selon la revendication 1, dans lequel ledit support (38) est fixé à l'extrémité d'un bras de liaison respectif (34) en dessous du bloc propulseur (36) de ce bras de liaison (34).

6. Drone selon la revendication 1, dans lequel ledit support (38) est fixé à un châssis (32) du corps de drone (10), ce châssis étant en partie inférieure du corps de drone.

7. Drone selon la revendication 1, dans lequel l'antenne glissée dans ledit support (38) forme un angle de 70° à 90° par rapport au bras de liaison respectif (34).

8. Drone selon la revendication 1, dans lequel le logement d'antenne (44) comprend un détrompeur (54) d'une forme donnée, l'antenne ayant un détrompeur (56) d'une forme complémentaire.

9. Drone selon la revendication 8, dans lequel le détrompeur (54) du logement d'antenne (44) est situé à l'opposé du bloc propulseur.

10. Drone selon la revendication 1, dans lequel ledit support (38) comprend des moyens de connexion aptes à être connectés à l'antenne, l'antenne étant munie de moyens de connexion complémentaires.

11. Drone selon la revendication 1, dans lequel ledit support (38) avec le logement d'antenne (44) et les moyens (52, 53) de maintien de l'antenne forment un élément amovible.

12. Drone selon la revendication 11, dans lequel, après assemblage sur le bras de liaison respectif (34) dudit élément amovible (38, 44, 52, 23) muni de l'antenne (46), le bras de liaison ferme le logement d'antenne (44) en fixant l'antenne (46) dans son logement (44).

## Patentansprüche

1. Rotorblattdrohne, umfassend:
- einen Drohnenkörper (10), umfassend eine elektronische Karte, welche die Lenkung der Drohne steuert, drahtlose Kommunikationsmittel und eine Mehrzahl von Verbindungsarmen (34),
- wobei die drahtlosen Kommunikationsmittel an mindestens eine Kommunikationsantenne (46) angeschlossen sind,
- eine Mehrzahl von Triebwerken (36), die an dem distalen Ende von jeweiligen Verbindungsarmen (34) montiert sind,
- mindestens einen Träger (38), der in der Lage ist, den Drohnenkörper (10) im Abstand zum Boden zu halten,
**dadurch gekennzeichnet**, der mindestens eine Träger (38) eine Antennenaufnahme (44) umfasst, die in der Lage ist, die Antenne (46) aufzunehmen, wobei die Antennenaufnahme (44) mit Mitteln (52, 53) zum Halten der Antenne (46) an dem Träger (38) versehen ist.

2. Drohne nach Anspruch 1, wobei die Mittel (52, 53) zum Halten der Antenne Gleitschienenverbindungsmittel sind, in denen die Antenne durch Translation gleitet.

3. Drohne nach Anspruch 1, wobei der Träger (38) an einem jeweiligen Verbindungsarm (34) befestigt ist und in einer zu dem Boden im Wesentlichen vertikal weisenden Richtung ist.

4. Drohne nach Anspruch 1, wobei der Träger (38) in einem Winkel von 60° bis 90° gegenüber der Richtung des jeweiligen Verbindungsarms (34) positioniert ist.

5. Drohne nach Anspruch 1, wobei der Träger (38) an dem Ende eines jeweiligen Verbindungsarms (34) unter dem Triebwerk (36) dieses Verbindungsarms (34) befestigt ist.

6. Drohne nach Anspruch 1, wobei der Träger (38) an einem Unterbau (32) des Drohnenkörpers (10) befestigt ist, wobei dieser Unterbau im unteren Teil des Drohnenkörpers (10) ist.

7. Drohne nach Anspruch 1, wobei die Antenne nach Gleiten in dem Träger (38) einen Winkel von 70° bis 90° gegenüber dem jeweiligen Verbindungsarms (34) bildet.

8. Drohne nach Anspruch 1, wobei die Antennenaufnahme (44) eine Vertauschsicherung (54) einer bestimmten Form umfasst, wobei die Antenne eine Vertauschsicherung (56) einer komplementären Form aufweist.

9. Drohne nach Anspruch 8, wobei die Vertauschsicherung (54) der Antennenaufnahme (44) dem Triebwerk gegenüber gelegen ist.

10. Drohne nach Anspruch 1, wobei der Träger (38) Anschlussmittel umfasst, die an der Antenne anschließbar sind, wobei die Antenne mit komplementären Anschlussmitteln versehen ist.

11. Drohne nach Anspruch 1, wobei der Träger (38) mit der Antennenaufnahme (44) und den Mitteln (52, 53) zum Halten der Antenne ein lösbares Element bildet.

12. Drohne nach Anspruch 11, wobei , nach Montage des mit der Antenne (46) versehenen lösbaren Elements (38, 44, 52, 23) an dem jeweiligen Verbindungsarm (34), der Verbindungsarm die Antennenaufnahme (44) verschließt, indem er die Antenne (46) in ihrer Aufnahme (44) fixiert.

## Claims

1. A rotary-wing drone, comprising:
- a drone body (10) comprising an electronic board controlling the piloting of the drone, wireless communication means and a plurality of linking arms (34),
- said wireless communication means being connected to at least one communication antenna (46),
- a plurality of propulsion units (36) mounted at the distal end of respective linking arms (34),
- at least one support (38), adapted to maintain said drone body (10) remote from the ground,
**characterized in that** said at least one support (38) comprises an antenna housing (44) adapted to receive said antenna (46), said antenna housing (44) being provided with means (52, 53) for holding said antenna (46) on said support (38).

2. The drone according to claim 1, wherein said antenna holding means (53, 53) are slider linking means into which the antenna is slid by translation.

3. The drone according to claim 1, wherein said support (38) is fastened to a respective linking arm (34) and is in a direction turned substantially vertically towards the ground.

4. The drone according to claim 1, wherein said support (38) is positioned according to an angle of 60° to 90° with respect to the direction of the respective link arm (34).

5. The drone according to claim 1, wherein said support (38) is fastened to the end of a respective linking arm (34) under the propulsion unit (36) of this linking arm (34).

6. The drone according to claim 1, wherein said support (38) is fastened to a frame (32) of the drone body (10), this frame being in lower part of the drone body.

7. The drone according to claim 1, wherein the antenna slid into said support (38) forms an angle of 70° to 90° with respect to the respective linking arm (34).

8. The drone according to claim 1, wherein the antenna housing (44) comprises a foolproofing means (54) of a given shape, the antenna having a foolproofing means (56) of complementary shape.

9. The drone according to claim 8, wherein the foolproofing means (54) of the antenna housing (44) is located at the opposite of the propulsion unit.

10. The drone according to claim 1, wherein said support (38) comprises connection means adapted to be connected to the antenna, the antenna being provided with complementary connection means.

11. The drone according to claim 1, wherein said support (38) with the antenna housing (44) and the antenna holding means (52, 53) form a removable element.

12. The drone according to claim 11, wherein, after assembly on the respective linking arm (34) of said removable element (38, 44, 52, 23) provided with the antenna (46), the linking arm closes the antenna housing (44) by fastening the antenna (46) in its housing (44).
